# EUROPÄISCHE PATENTSCHRIFT

(11) **EP 1 960 108 B1**
(45) Veröffentlichungstag und Bekanntmachung des Hinweises auf die Patenterteilung: **10.01.2018**
(21) Anmeldenummer: 06817726.0
(22) Anmeldetag: 30.11.2006
(51) Int. Cl.: B02C 13/14, B02C 13/28, H02G 15/007, H02G 15/08, H02G 3/06

(54) **ROTOR FÜR EINE PRALLMÜHLE**
ROTOR FOR AN IMPACT CRUSHER
ROTOR POUR BROYEUR A PERCUSSION

(30) Priorität: 08.12.2005 CH 19372005
(43) Veröffentlichungstag der Anmeldung: 27.08.2008
(73) Patentinhaber: swissRTec AG, 8280 Kreuzlingen (CH)
(72) Erfinder: ZÖLLIG, Mario, 8598 Bottighofen (CH)
(74) Vertreter: Feldmann, Clarence Paul
(86) Internationale Anmeldenummer: PCT/CH2006/000674
(87) Internationale Veröffentlichungsnummer: WO 2007/065282

(56) Entgegenhaltungen:
- DE-B- 1 184 609
- GB-A- 557 461
- US-A- 1 686 128
- US-A- 2 152 332

## Beschreibung

Die vorliegende Erfindung betrifft einen Rotor für eine Prallmühle mit einer vertikal verlaufenden Rotorwelle und mindestens einer drehfest damit verbundenen Sternplatte, an der eine Vielzahl von auswechselbaren, daran befestigten Schlagwerkzeugen, mittels auswechselbaren unterschiedlichen Formstücken in der relativen Distanz zum Zentrum der Rotorscheibe montierbar gehalten sind.

Eine derartige Vorrichtung ist aus der GB557461 bekannt. Prallmühlen werden in verschiedensten Bereichen der Technik eingesetzt, wobei hier jedoch nur die Anwendung bezüglich der Auftrennung respektive Aufschliessen von Verbundmaterialien interessiert. Solche Verbundmaterialien können Verbunde aus Metall/Metall, Kunststoff/Kunststoff, Metall/Kunststoff oder mineralische Verbunde mit Metallen und/oder Kunststoffen sein. Da die physikalischen Eigenschaften der einzelnen Komponenten der Verbundstoffe unterschiedlich sind, werden solche Verbundstoffpartikel in Prallmühlen dadurch getrennt, dass bei jedem Impuls sich verschiedene Materialien ungleich elastisch und ungleich plastisch verformen und sich damit trennen. Typische Verbundmaterialien, die von der Anmelderin verarbeitet werden sind beispielsweise Elektronikschrott und Shredderabfälle wie Reststoffe aus dem Shredder (RESH), Shredderleichtfraktionen (SLF) oder Automotive Shredder Residues (ASR) aus der Autoverwertung.

Die Anwendung von Prallmühlen in diesem Bereich ist mit enormem Verschleiss der Schlagwerkzeuge verbunden. Dies ganz im Gegensatz zu Schlagmühlen, die zur Vermahlung von körnigen Produkten verwendet werden, insbesondere in der Lebensmittel aufbereitenden Industrie. Ein Beispiel einer solchen Schlagmühle geht aus der DE-10 355 119 A hervor.

Viele Prallmühlen arbeiten mit so genannten Schlagleisten, die über den gesamten Wirkbereich der Rotorwelle parallel zu dieser verlaufend angebracht sind. Prinzipiell kennt man dabei zwei Versionen, nämlich einerseits Ausführungsformen, bei denen die Schlagleiste als Wendeschlagleiste ausgestaltet ist und folglich nach einer Abnutzung der einen Seite um 180° gewendet wieder einsetzbar ist und so nochmals eine gleiche Verschleisszeit zur Verfügung steht. Da solche Wendeschlagleisten in radialer Richtung nicht nachstellbar sind, sind sie praktisch nur anwendbar in Bereichen, in denen der Abrieb pro Zeiteinheit relativ gering ist. Denn mit dem Abrieb wird nicht nur die Leiste dünner, sondern auch die radiale Distanz der Schlagleisten nimmt ab. Dies ist nicht zuletzt darauf zurückzuführen, dass die in radialer Richtung weiter aussen liegenden Bereiche der Schlagleiste mit höherer Umfangsgeschwindigkeit bewegt werden und folglich hier auch die entsprechenden Impulse höher und damit die Abnützung stärker ist. Wird die Schlagleiste jedoch an der Aussenkante stark abgenutzt, so vergrössert sich der Spalt zwischen der Schlagleiste und den Prallwänden im Stator. Damit wird aber auch automatisch der Wirkungsgrad der Mühle reduziert. Ein Beispiel eines Prallmühlenrotors mit einer Wendeschlagleiste geht beispielsweise aus der EP-0'945'181-A hervor. Für die Anwendung im Bereich der Materialverbundaufschliessung, insbesondere für Shredderabfälle der Altautoentsorgung sowie Elektronikschrott sind Konstruktionen der hier genannten Art wenig geeignet. Neben dem in diesen Bereichen extrem hohen Verschleiss kommt hinzu, dass eine extreme Partikelablagerung mit zum Teil hohen öligen Anteilen erfolgt, wobei sich diese Partikel überall am Rotor absetzen. Müssen die Schlagleisten ausgewechselt oder umgedreht werden, so müssen entsprechende Schraubverbindungen, die der Klemmung der Leisten dienen, gelöst werden. Dies ist ohne eine aufwändige Reinigung praktisch unmöglich.

Bei einer sehr eigenwilligen Konstruktion, bei der die Rotorwelle aus einem Mantel besteht, der aus Ringen gestaltet ist, die über umlaufende Schweissnähte verbunden sind, lassen sich hier zwischen den einzelnen Ringsegmenten Schlagwerkzeuge einsetzen, die durch achsparallele Stäbe, welche die Scheiben durchsetzen, gehalten sind. Auch diese Lösung weist das Manko auf, dass mit dem Verschleiss der Werkzeuge sich auch der Zwischenraum zwischen den Enden der Schlagwerkzeuge und der Prallwand des Stators ständig vergrössert und damit auch der Wirkungsgrad der Mühle herabgesetzt wird.

Schliesslich ist aus der WO 00/53324-A eine Prallmühle mit einem Rotor bekannt. Der Rotor dieser Prallmühle weist eine Sternplatte auf, an der hufeisenförmig gestaltete Schlagwerkzeuge vorhanden sind, deren freie Enden mindestens annähernd radial nach aussen gerichtet sind. Innerhalb des inneren Freiraumes dieser hufeisenförmig gestalteten Schlagwerkzeuge sind Formstücke angebracht, die sich je nach Verschleiss der Schlagwerkzeuge auswechseln lassen, um so die freien Enden wieder näher zu den Prallwänden des Stators zu bringen. Damit lässt sich der Abstand zwischen den freien Verschleissenden der hufeisenförmigen Schlagwerkzeuge in einem relativ engen Rahmen bezüglich der Distanz dieser freien Enden und der Prallwand am Stator einstellen und damit kann die Effektivität des Systems beibehalten werden. Die Formstücke unterliegen keiner Abnutzung und werden je nach Erfordernis ausgewechselt. Die hier interessierenden Prallmühlen weisen einen Rotordurchmesser von beispielsweise 1-2 Metern auf und drehen mit einer Tourenzahl zwischen 1000-3000 U/min. Dies gibt Umfangsgeschwindigkeiten von bis zu 500 km/h. Gelangen daher in eine solche Prallmühle grössere Elemente oder bilden sich aus Zufälligkeiten gewisse Klumpen, so wäre das Drehmoment bei einer Fassblockade derart gross, dass sowohl Rotor wie auch Stator der Prallmühle beschädigt werden würden. Da die Formstücke auf der Rotorscheibe mittels eines Bolzens oder einer Schraube an der Sternplatte befestigt sind, können die Formstücke drehen. Der dabei auftretende Drehmomentimpuls ist jedoch enorm gross. Die Anordnung mit einer einseitigen Lagerung des Formstückes oberhalb der Sternplatte ergibt eine ungünstige Krafteinleitung und entsprechend können Folgeschäden durch einen scherenden Bolzen oder Schraube, mit der ein Formstück an der Sternplatte befestigt ist, vorkommen.

Ein weiteres Problem dieser bekannten Lösung eines Rotors einer Prallmühle besteht darin, dass der Materialanteil der Schlagwerkzeuge, der nicht der Abnutzung zur Verfügung steht, prozentual sehr hoch ist. Optimal gerechnet stehen lediglich 20-30% des Volumens der Schlagwerkzeuge der Abnutzung zur Verfügung. Dies erhöht aber die gesamten Verarbeitungskosten.

Es ist daher die Aufgabe der vorliegenden Erfindung, einen Rotor für eine Prallmühle zu schaffen, bei dem die Schlagwerkzeuge ohne Verschraubungen auswechselbar gehalten sind, bei dem ferner der prozentuale Anteil des verschleissbaren Volumens der Schlagwerkzeuge wesentlich erhöht ist und die Lagerung der Schlagwerkzeuge hohe Übertragungskräfte aufzunehmen vermag und die Schwenkbarkeit der Schlagwerkzeuge relativ zur Sternplatte verbessert und sicherer gestaltet sein soll. Diese vielseitige Aufgabe löst ein Rotor für eine Prallmühle der eingangs genannten Art mit den Merkmalen des kennzeichnenden Teils des Patentanspruches 1.

Weitere vorteilhafte Ausgestaltungsformen des Erfindungsgegenstandes gehen aus den abhängigen Ansprüchen hervor und deren Bedeutung und Wirkungsweise wird in der nachfolgenden Beschreibung mit Bezug auf die anliegenden Zeichnungen erläutert.

In der Zeichnung ist ein bevorzugtes Ausführungsbeispiel des Erfindungsgegenstandes detailliert dargestellt und nachfolgend beschrieben. Es zeigt:
- Figur 1: eine perspektivische Ansicht des erfindungsgemässen Rotors einer Prallmühle und
- Figur 2: denselben Rotor in einem axialen Längsschnitt.
- Figur 3: zeigt eine einzelne Sternplatte mit den daran montierten Schlagwerkzeugen in der Aufsicht und
- Figur 4: eine ebensolche Sternplatte mit Schlagwerkzeugen, jedoch in perspektivischer Darstellung.
- Figur 5: stellt das erfindungsgemässe Schlagwerkzeug in perspektivischer Ansicht von der Innenseite und
- Figur 6: dasselbe Schlagwerkzeug, ebenfalls in perspektivischer Darstellung von der anderen Seite her gesehen.
- Figur 7: zeigt eine perspektivische Darstellung eines Werkzeughaltebügels,
- Figur 8: einen durch den Werkzeughaltebügel durchführbaren Lagerbolzen und
- Figur 9: ein in der Sternplatte einlegbares und auswechselbar darin gehaltenes Formstück, deren Zusammenwirkung auf den nachfolgenden Figuren erkennbar ist, wobei
- Figur 10: einen radialen Teilschnitt durch die Sternplatte und das Schlagwerkzeug sowie die zur Befestigung des Schlagwerkzeuges an der Sternplatte erforderlichen Elemente zeigt;
- Figur 11: zeigt denselben Schnitt in perspektivischer Darstellung und
- Figur 12: zeigt den entsprechenden Teil der Sternplatte in der Aufsicht von oben.

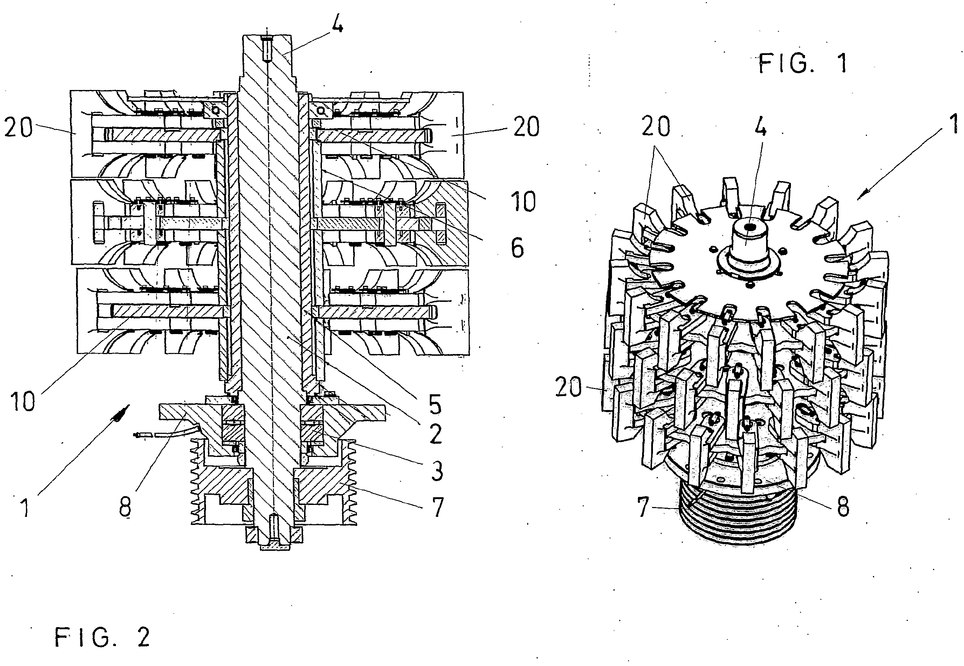

Während die Prallmühle in ihrer Gesamtheit hier nicht dargestellt ist und im Prinzip herkömmlich gestaltet sein könnte, ist der Rotor in den Figuren 1 und 2 in der Zusammenstellung gezeigt. Der Rotor ist gesamthaft mit 1 bezeichnet und umfasst die charakteristische vertikal angeordnete Rotorwelle 2 mit einem antriebsseitigen Lager 3 und einem entsprechenden Lager 4, welches am gegenüber liegenden Ende der Welle im Gehäuse des Mühlenstators lagert.

Um die Welle ist ein Wellenmantel 5 verdrehfest auf der Welle 2 montiert. Dieser Wellenmantel weist entsprechende Rippen auf, die dazu dienen, eine oder mehrere Sternplatten 10 in vorgegebener und gewünschter relativer Winkelanordnung zur Welle und zueinander zu montieren. Zwischen den einzelnen Sternplatten 10 sind jeweils Distanzzylinderstücke 6 vorhanden, welche die Positionierung der Sternplatten 10 in axialer Richtung relativ zum Lager und andererseits relativ zueinander in axialer Richtung sichern. Der Antrieb der Welle erfolgt über ein mehrnutiges Keilriemenrad 7, welches drehfest auf das antriebsseitige Ende der Rotorwelle 2 montiert ist. Die gesamte Rotorwelle wird schliesslich über einen Rotorlagerring mit dem Statorgehäuse verbunden und das Statorgehäuse ist auf einem Chassis montiert, auf dem auch ein entsprechender Antriebsmotor angeordnet ist, mittels dem über entsprechende Keilriemen die Rotorwelle 1 angetrieben werden kann. Die Chassisplatte kann aber auch selber Teil des Statorgehäuses sein und entsprechend ist dann der Rotorlagerring 8 direkt in der Chassislagerplatte montiert.

Wie erwähnt spielt jedoch der Aufbau und die Gestaltung des Stators hier keine Rolle und entsprechend wird auch darauf nicht weiter eingegangen.

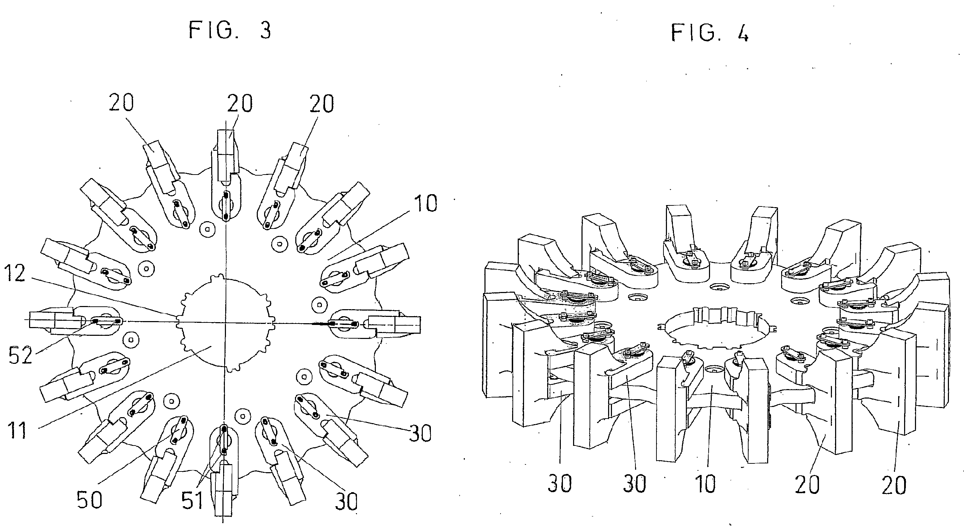

In der Figur 3 ist die Sternplatte 10 in der Aufsicht mit allen daran befestigten Schlagwerkzeugen 20 ersichtlich. Die Sternplatte wird so genannt, da alle Werkzeuge am Umfang der Sternplatte radial nach aussen gerichtet angeschlossen sind und somit die Gestalt eines mehrarmigen Sternes bilden. Die Sternplatte 10 weist ein zentrisches, kreisrundes Aufnahmeloch 11 auf, in dem in vorgebbaren Winkellagen entsprechende Rippenausnehmungen 12 eingeformt sind, welche radial nach aussen gerichtet sind. Diese Rippenausnehmungen dienen dazu, um formschlüssig entsprechende Rippen am Wellenmantel aufzunehmen, womit die spezielle Winkellage der Sternplatte 10 relativ zur Welle gesichert ist. Die nächste Sternplatte kann entsprechend so angebracht werden, dass die Scheibe in anderen Rippen am Wellenmantel eingreift, und somit ist die Sternplatte gegen die zuvor montierte Sternplatte um einen Winkel verstellt angeordnet. Dieser Winkel entspricht in etwa der halben Teilung zweier benachbarter Schlagwerkzeuge. Eine geringfügige Abweichung von dieser Teilung gewährt die volle Schwenkbarkeit der Schlagwerkzeuge an benachbarten Sternplatten. Bei entsprechender Wahl der Abstände zwischen zwei Sternplatten können jedoch die Schlagwerkzeuge durchaus übereinander in Linie angeordnet sein.

Die Schlagwerkzeuge 20 werden unterhalb und oberhalb der jeweiligen Sternplatte 10 mittels Werkzeughaltebügeln 30 gehalten. In der perspektivischen Darstellung nach der Figur 4 erkennt man beide Werkzeughaltebügel, die mit dem Schlagwerkzeug 20 formschlüssig verbunden sind.

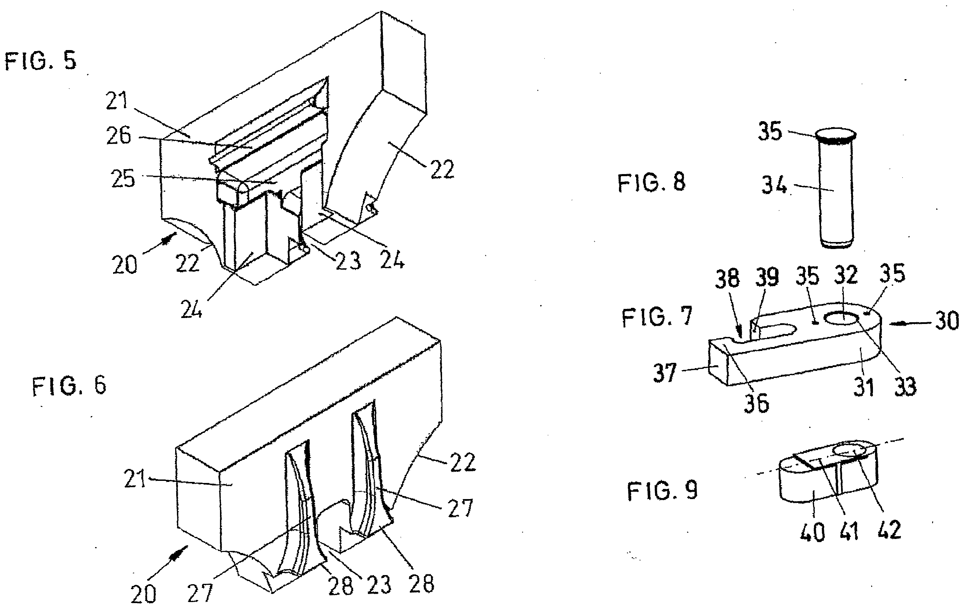

In den Figuren 5 und 6 ist das erfindungsgemässe Schlagwerkzeug in perspektivischer Darstellung von beiden Seiten gezeigt. Die Figur 5 zeigt das Schlagwerkzeug in Bezug auf die Drehrichtung von der rückwärtigen Seite, also jener Seite, die nicht der direkten Abrasion ausgesetzt ist, während die Figur 6 die in Drehrichtung vorne liegende, Verschleissseite zeigt. Die Schlagwerkzeuge haben insgesamt die Form eines Paddelblattes. Der vordere rechteckige Blattteil 21 steht vollständig dem Verschleiss zur Verfügung. An dem zur Sternplatte hin gerichteten Ende, welches sich über zwei seitliche Kurven 22 verjüngt, ist ein Einschnitt 23 erkennbar. Links und rechts von diesem Einschnitt sind zwei Halteklötze 24 angeformt. Diese Halteklötze sind praktisch in Richtung zur Sternplatte hin frei vorstehend und können folglich von den noch zu beschreibenden Werkzeughaltebügeln 30 auf vier Seiten umfasst werden. Den Halteklötzen 24 anschliessend in Richtung zum Blattteil 21 ist eine Eingriffsnut 25 ersichtlich. Diese Eingriffsnut 25 ist an jener Längsseite, welche gegenüber den Halteklötzen 24 abgelegen ist, erhöht und bildet eine Anschlagsrippe 26. Ferner sind auf dem Blattteil 21 auf der verschleissseitigen Seite links und rechts vom Einschnitt 23 Versteifungsrippen 27 angeformt, die sich von aussen nach innen hin erhöhen und an ihren Sternplattenseitigen Enden gerade abgeschnitten sind und entsprechende Stirnflächen 28 bilden.

Über eine rein formschlüssige Verbindung sind die Schlagwerkzeuge 20 mit der Sternplatte 10 verbunden. Hierzu dienen insbesondere die Werkzeughaltebügel 30. Figur 7 zeigt einen solchen Werkzeughaltebügel in perspektivischer Darstellung. Der Werkzeughaltebügel 30 wird vorzugsweise aus hochfestem Stahl geschmiedet. Die Schlagwerkzeuge 20 sind bevorzugterweise als Stahlgussteile gefertigt, könnten jedoch auch als Schmiedestücke gefertigt werden. Der Werkzeughaltebügel 30 hat zwei zueinander parallel verlaufende Seitenflächen, ein zur Sternplatte hin gerichtetes gerundetes Ende und ein zum Schlagwerkzeug hin gerichtetes hakenförmiges Ende. Im gerundeten Ende 31 ist eine Lagerbohrung 32 eingeformt. Die Lagerbohrung 32 weist auf ihrer in der Einbaulage oberen Seite eine Anfasung 33 auf, welche einerseits die Einführung des Lagerbolzens 34, welcher in der Figur 8 gezeigt ist, erleichtert und andererseits als Anschlagfläche dient für die endseitige Verdickung 35 am Lagerbolzen 34. Damit findet dieser Lagerbolzen einen entsprechenden Anschlag und verbleibt unter Einfluss der Schwerkraft in dieser Position. Über die Lagerbohrung 32 hinweg diametral gegenüber liegend sind zwei Sacklochbohrungen 35 vorhanden, in die zwei hier nicht ersichtliche Stifte einsetzbar sind. An einem dieser Stifte ist ein Sicherungsplättchen schwenkbar gehalten, welches eine Ausnehmung aufweist, um den zweiten Stift form- und/oder kraftschlüssig zu fassen.

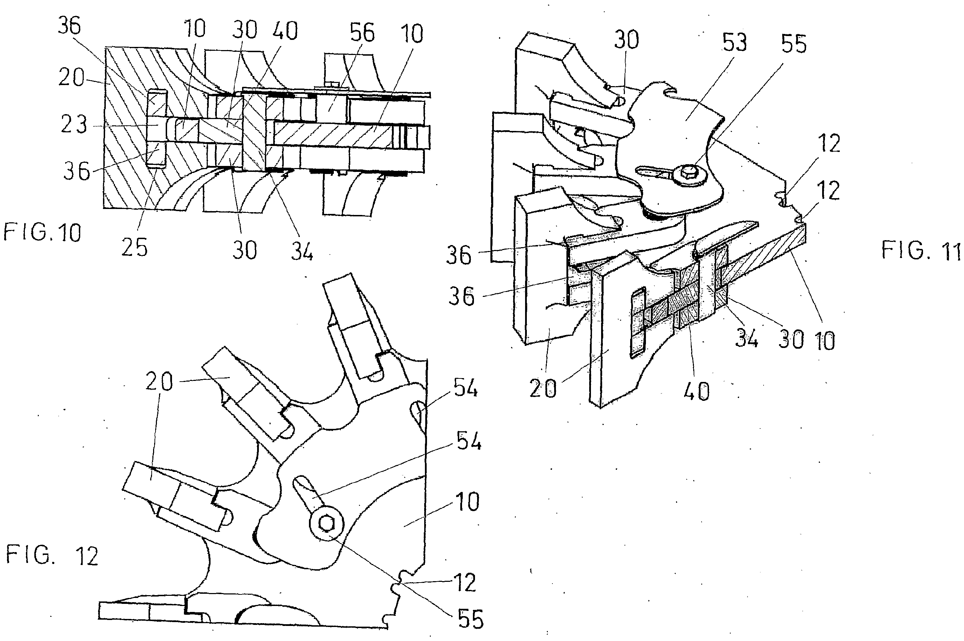

Das hakenförmige Ende 36 des Werkzeughaltebügels 30 weist eine gerade Stirnfläche 37 auf, welche im montierten Zustand an der äusseren Wand der Eingriffsnut 25 und an der mit dieser Wand fluchtenden Fläche der Anschlagrippe 26 im montierten Zustand anliegt. Im hakenförmigen Ende 36 ist die entsprechende hakenförmige Ausnehmung 38 eingeformt. Diese hakenförmige Ausnehmung 38 ist so dimensioniert, dass im montierten Zustand der entsprechende Halteklotz 24 von vier Seiten jeweils anliegend umgriffen wird. Parallel zur geraden Stirnfläche 37 ist eine zweite Stirnfläche 39 vorhanden, welche im montierten Zustand an den entsprechenden Stirnflächen 28 der Versteifungsrippen 27 zum Anliegen kommt. Damit wird das Drehmoment, welches während der Arbeit der Schlagwerkzeuge auf diese wirkt, an diesen beiden Stirnflächen 37 und 39 abgefangen. Bei den hier bestehenden hohen Drehzahlen ist jedoch die Fliehkraft derart gross, dass dieses Drehmoment von der Fliehkraft vollständig aufgenommen wird, falls nicht, wie zuvor bereits beschrieben, ein Ereignis eintritt, welches praktisch schlagartig zu einer Erhöhung des Drehmomentes führt, worauf dann das Schlagwerkzeug um den Bolzen 34 verdreht wird. Hierdurch erhöht sich der Arbeitsspalt zwischen den Schlagwerkzeugen und den umlaufenden Prallwänden, was zu einer sofortigen Entlastung des gesamten Systems führt. In der Figur 9 ist das bisher in den verschiedenen Figuren nicht ersichtliche Formstück für sich allein dargestellt. Dieses Formstück hat üblicherweise eine längliche Form und auf deren Längsachse 41 ist irgendwo zwischen zwei Endpositionen eine Lagerbohrung 42 angebracht. Je nach der Zusammensetzung der aufzuschliessenden Verbundstoffe ist früher oder später der Blattteil 21 am Schlagwerkzeug 20 so weit abgenutzt, dass der Arbeitsspalt zwischen der Vorderkante des Schlagwerkzeuges und der Prallwand am Stator so gross ist, dass entweder die Aufschliessung ungenügend ist, beziehungsweise der Wirkungsgrad herabgesetzt ist. Sobald dies der Fall ist, müssen die Schlagwerkzeuge in radialer Richtung nach aussen versetzt werden. Dies erfolgt dadurch, dass die Formstücke 20 ausgetauscht werden. Entsprechend ist für jeden Rotor einer Prallmühle eine Vielzahl von Serien von Formstücken 40 erforderlich, wobei bei jeder Serie die relative Anordnung der Lagerbohrung 42 auf der Längsachse 41 unterschiedlich ist. Zur Erläuterung der Montage wird diesbezüglich auf die Figuren 10 bis 12 verwiesen.

In der Figur 10 ist ein radialer Vertikalschnitt gezeigt. Das paddelblattförmige Schlagwerkzeug 20 ist entsprechend mittig geschnitten. In der Mitte verläuft die Sternplatte 10. In der Sternplatte 10 ist das Formstück 40 eingelegt. Man erkennt den Einschnitt 23 im Schlagwerkzeug 20 und die dazu rechwinklig verlaufende Eingriffsnut 25. In die Eingriffsnut 25 greifen die hakenförmigen Enden 36 der oberen und unteren Werkzeughaltebügel 30 ein. Der Lagerbolzen 34 durchgreift von oben nach unten zuerst den oberen Werkzeughaltebügel 30, danach das Formstück 40 und schliesslich den unteren Werkzeughaltebügel 30. Hier erkennt man auch den angeformten Kragen am Lagerbolzen 34, der dessen Position bestimmt.

In der Ansicht gemäss der Figur 11, welche denselben Schnitt in perspektivischer Darstellung zeigt, sind hier zusätzlich noch die Rippenausnehmungen 12 in der Sternplatte 10 erkennbar. Mit Verweis auf die Figur 3 wird nun nochmals auf die Sicherung des Lagerbolzens 34 verwiesen. Wie bereits erwähnt, sind in den Werkzeughaltebügeln 30 Sacklochbohrungen 35 eingeformt, in die Stifte 51 eingesetzt sind. Um den in radialer Richtung inneren Stift ist ein Sicherungsplättchen 50 schwenkbar angeordnet. Mittels einer seitlichen Öffnung 52 umgreift das Sicherheitsplättchen 50 den in radialer Richtung äusseren Stift 51. Die Drehrichtung der Sternplatte und die Drehrichtung des Sicherheitsplättchens zum Schliessen desselben sind gegenläufig, wodurch das Sicherheitsplättchen sich praktisch selbsttätig aus einer Kombination des Trägheitsmomentes und der Fliehkraft in die Schliessposition bewegen würde. Selbstverständlich wird man sich aber darauf alleine nicht verlassen.

In der Darstellung gemäss der Figuren 10 bis 12 ist jedoch die Sicherung des Lagerbolzens 34 mittels eines Sicherheitsschiebers realisiert. Dieser Sicherheitsschieber 53 hat eine kreissegmentförmige Gestalt und weist zwei Schieberschlitze 54 auf, die parallel zueinander und bezüglich des Zentrums der Sternplatte 10 von innen nach aussen gerichtet sind. Durch die Schieberschlitze 54 ragen Sicherungsschrauben 55, die unter Zwischenlage einer Buchse 56, die geringfügig länger ist als die Dicke der Werkzeughaltebügel 30, in die Sternplatte 10. Der Vorteil dieser Sicherheitsschieber 53 besteht darin, dass beispielsweise für den gesamten Umfang vier solcher Schieber genügen und jeder Schieber gleichzeitig vier Lagerbolzen 34 sichert. Dank der grösseren Masse des Sicherheitsschiebers 43 ist auch absolut gesichert, dass auf Grund der wirkenden Zentrifugalkräfte der Sicherheitsschieber 53 nach aussen gleitet und damit die Lagerbolzen 34 vollständig überdeckt.

Der hier beschriebene erfindungsgemässe Rotor für eine Prallmühle löst die gestellten Aufgaben in idealer Weise. Die paddelblattförmigen Schlagwerkzeuge lassen sich bis auf mindestens 50% Restvolumen unter Wahrung der vollen Effizienz nutzen.

Die spezielle Gestaltung der Halterung der Schlagwerkzeuge erlaubt eine schraubfreie Auswechslung der Schlagwerkzeuge beziehungsweise eine schraubfreie Verstellung der Schlagwerkzeuge in radialer Richtung. Hierzu muss man lediglich die Sicherheitsschieber 53 in radialer Richtung nach innen verschieben, die nun frei liegenden Lagerbolzen 34 herausnehmen, den oberen der beiden Werkzeughaltebügel 30 entfernen und das entsprechende Formstück 40 aus der Sternplatte 10 herausziehen und durch ein anderes Formstück mit einer Lagerbohrung bei dem diese Lagerbohrung 42 auf der Längsachse 41 des Formstückes etwas weiter zum Zentrum hin angeordnet ist, ersetzen. Diese Auswechslungsarbeiten können problemlos erfolgen, ohne dass hierzu vorgängig eine Reinigung erfolgen muss. Die gesamte Prallmühle ist selbstverständlich so konzipiert, dass der Rotor nach Entfernen des Gehäusedeckels als Paket aus dem Statorgehäuse gezogen werden kann. Die erforderlichen Servicearbeiten, wie Reinigung oder Auswechslung der Formstücke 40, können nun ohne Zerlegung des Rotors erfolgen.

### Bezugszeichenliste:

- 1: Rotor einer Prallmühle
- 2: Rotorwelle
- 3: antriebsseitiges Lager der Rotorwelle
- 4: gehäuseseitiges Lager der Rotorwelle
- 5: Wellenmantel
- 6: Distanzzylinderstück
- 7: mehrnutiges Keilriemenrad
- 8: Rotorlagerring
- 10: Sternplatte
- 11: zentrisches kreisrundes Aufnahmeloch
- 12: Rippenausnehmungen
- 20: Schlagwerkzeug
- 21: Blattteil
- 22: Kurven
- 23: Einschnitt
- 24: Halteklötze
- 25: Eingriffsnut
- 26: Anschlagsrippe
- 27: Versteifungsrippen
- 28: Stirnflächen
- 30: Werkzeughaltebügel
- 31: gerundetes Ende
- 32: Lagerbohrung
- 33: Anfasung
- 34: Lagerbolzen
- 35: Sacklochbohrungen
- 36: hakenförmiges Ende
- 37: gerade Stirnfläche
- 38: hakenförmige Ausnehmung
- 39: zweite Stirnfläche
- 40: Formstück
- 41: Längsachse
- 42: Lagerbohrung
- 50: Sicherheitsplättchen
- 51: Stifte
- 52: seitliche Öffnung
- 53: Sicherheitsschieber
- 54: Schieberschlitze
- 55: Sicherungsschrauben

## Patentansprüche

1. Rotor für eine Prallmühle mit einer vertikal verlaufenden Rotorwelle (2) und mindestens einer drehfest damit verbundenen Sternplatte (10), an der eine Vielzahl von auswechselbaren, daran befestigten Schlagwerkzeugen (20), gehalten sind, die Schlagwerkzeuge (20) die Gestalt von Paddelblättern haben mit einem befestigungsseitigen zentrischen Einschnitt (23), dem beidseitig ein Halteklotz (24) angeformt ist, wobei oberhalb und unterhalb der Sternplatte (10) Werkzeughaltebügel (30) vorhanden sind, welche formschlüssig mit den Halteklötzen (24) zusammenwirken, **dadurch gekennzeichnet, dass** die Schlagwerkzeuge (20) mittels auswechselbaren unterschiedlichen Formstücken (40) in der relativen Distanz zum Zentrum der Rotorwelle (2) montierbar sind, wobei die Werkzeughaltebügel (30) mittels je eines gesicherten Lagerbolzens (34) gemeinsam, über das in der Sternplatte (10) lagefest eingepasste Formstück (40), schwenkbar gelagert sind und der Lagerbolzen (34) durch den oberen Werkzeughaltebügel (30), danach durch das Formstück (40) und schliesslich durch den unteren Werkzeughaltebügel (30) greift.

2. Rotor nach Anspruch 1, **dadurch gekennzeichnet, dass** die Werkzeughaltebügel (30) um ein Spiel dünner sind, als die Breite des Einschnitts (23) in den Schlagwerkzeugen (20).

3. Rotor nach Anspruch 1, **dadurch gekennzeichnet, dass** die Schlagwerkzeuge (20) mit den Werkzeughaltebügeln (30) um den gesicherten Lagerbolzen (34) schwenkbar sind.

4. Rotor nach Anspruch 1, **dadurch gekennzeichnet, dass** die Halteklötze (24) an den Schlagwerkzeugen (20) an dem im montierten Zustand zur Sternplatte (10) hin gerichteten Ende vorstehen und dass die Werkzeughaltebügel (30) eine hakenförmige Ausnehmung (38) aufweisen, welche den jeweiligen Halteklotz (24) formschlüssig mit Spiel zu umgreifen vermögen.

5. Rotor nach Anspruch 4, **dadurch gekennzeichnet, dass** die paddelförmigen Schlagwerkzeuge (20) eine quer zur Längsausdehnung der Halteklötze verlaufende Eingriffsnut (25) aufweisen, deren von den Halteklötzen (24) entfernte Nutwand gegenüber der Paddelblattfläche der Schlagwerkzeuge (20) erhöht ist und eine Anschlagsrippe (26) für die Werkzeughaltebügel (30) bildet.

6. Rotor nach Anspruch 5, **dadurch gekennzeichnet, dass** die paddelblattförmigen Schlagwerkzeuge (20) auf der der Anschlagsrippe (26) gegenüber liegenden Fläche zwei in Einschnittrichtung verlaufende und etwa mittig auf den Halteklötzen (24) endende Versteifungsrippen (27) aufweisen, die je eine Stirnfläche (28) aufweisen, welche als Anschlagsfläche für je einen Werkzeughaltebügel (30) dienen.

7. Rotor nach Anspruch 1, **dadurch gekennzeichnet, dass** in der Sternplatte (10) Ausnehmungen geformt sind, in denen die Formstücke (40) formschlüssig einlegbar sind, welche eine Lagerbohrung (42) aufweisen, die den Lagerbolzen (34) entsprechend dimensioniert sind.

8. Rotor nach Anspruch 7, **dadurch gekennzeichnet, dass** die Formstücke (40) eine spiegelsymmetrische Aussenkontur haben und die Lagerbohrung (42) auf der Längsachse (41) der Formstücke (40) angeordnet ist.

9. Rotor nach Anspruch 1, **dadurch gekennzeichnet, dass** die Werkzeughaltebügel (30) eine vom Lagerbolzen (34) zu durchsetzende Lagerbohrung (32) aufweisen und zwei Stifte (51), die auf einer die Lagerbohrung (32) diametral querenden Gerade angeordnet sind, wobei an einem der beiden Stifte (51) ein Sicherheitsplättchen (50) schwenkbar gehalten ist, welches eine Ausnehmung aufweist, um den zweiten Stift (51) form- und/oder kraftschlüssig zu fassen.

10. Rotor nach Anspruch 1, **dadurch gekennzeichnet, dass** der Rotor (1) mehrere Sternplatten (10) mit entsprechenden gleichmässig am Umfang verteilt angeordneten Schlagwerkzeugen (20) aufweist, wobei jeweils zwei benachbarte Sternplatten (10) um eine halbe Teilung der Schlagwerkzeuge (20) versetzt angeordnet sind.

11. Rotor nach Anspruch 1, **dadurch gekennzeichnet, dass** der Rotor mehrere Sternplatten (10) mit entsprechend am Umfang verteilt angeordneten Schlagwerkzeugen (20) aufweist, wobei die Sternplatten in der Projektion deckungsgleich übereinander angeordnet sind, so dass sämtliche übereinander liegenden Schlagwerkzeuge in Linie liegen.

12. Rotor nach Anspruch 1, **dadurch gekennzeichnet, dass** mehrere benachbarte Lagerbolzen (34) mittels eines Sicherheitsschiebers (53), welcher mindestens einen Schieberschlitz aufweist, durch den eine Sicherungsschraube hindurch greift, gesichert sind, wobei der Schieberschlitz so verläuft, dass unter Wirkung der Fliehkraft der Sicherheitsschieber über den Lagerbolzen (34) zu liegen kommt.

## Claims

1. A rotor for an impact mill having a vertically running rotor shaft (2) and at least one stellate plate (10) connected thereto in a rotationally fixed manner, on which a multiplicity of replaceable impact tools (20) fastened thereon are held, the impact tools (20) have the shape of paddle blades with a fastening side central notch (23), on which a holding block (24) is formed on both sides, tool mounting brackets (30) being present above and below the stellate plate (10), which interact with the holding blocks (24) in a positive manner, **characterized in that** the impact tools (20) can be mounted by means of replaceable different moulded pieces (40) in the relative distance from the centre of the rotor shaft (2), wherein the tool mounting brackets (30) are mounted together in a pivotable manner by means of a secured mounting bolt (34) in each case, via the moulded piece (40) which is fitted in the stellate plate (10) in a fixed manner, and the mounting bolt (34) engages through the upper tool holding bracket (30), then through the moulded piece (40) and finally through the lower tool holding bracket (30).

2. The rotor according to claim 1, **characterized in that** the tool holding brackets (30) are thinner with play than the width of the notch (23) in the impact tools (20).

3. The rotor according to claim 1, **characterized in that** the impact tools (20) can be pivoted with the tool holding brackets (30) around the secured mounting bolts (34).

4. The rotor according to claim 1, **characterized in that** the holding blocks (24) on the impact tools (20) protrude at the end directed towards the stellate plate (10) in the mounted state and **in that** the tool holding brackets (30) have a hook-shaped recess (38), which are capable of encompassing the respective holding block (24) in a positive manner with play.

5. The rotor according to claim 4, **characterized in that** the paddle-shaped impact tools (20) have an engagement groove (25) running transversely to the longitudinal extent of the holding blocks, the groove wall of which engagement groove, remote from the holding blocks (24) is elevated compared to the paddle blade surface of the impact tools (20) and forms a stop rib (26) for the tool holding bracket (30).

6. The rotor according to claim 5, **characterized in that** the paddle-blade-shaped impact tools (20) have two reinforcing ribs (27) on the surface opposite the stop rib (26), running in the notch direction and ending approximately centrally on the holding blocks (24), which reinforcing ribs each have an end face (28) which is used as the stop surface for one tool holding bracket (30) in each case.

7. The rotor according to claim 1, **characterized in that** recesses are formed in the stellate plate (10), in which the moulded pieces (40) can be inserted in a positive manner, which have a bearing bore (42), which are dimensioned in accordance with the mounting bolts (34).

8. The rotor according to claim 7, **characterized in that** the moulded pieces (40) have a mirror-symmetrical outer contour and the bearing bore (42) is arranged on the longitudinal axis (41) of the moulded pieces (40).

9. The rotor according to claim 1, **characterized in that** the tool holding brackets (30) have a bearing bore (32) to be penetrated by the mounting bolt (34), and two pins (51) which are arranged on a straight line diametrically crossing the bearing bore (32), wherein a securing plate (50) is pivotably held on one of the two pins (51), which securing plate has a recess, in order to hold the second pin (51) in a positive and/or non-positive manner.

10. The rotor according to claim 1, **characterized in that** the rotor (1) has a plurality of stellate plates (10) with corresponding impact tools (20) arranged in an evenly distributed manner on the circumference, wherein in each case, two adjacent stellate plates (10) are arranged offset by half a spacing of the impact tools (20).

11. The rotor according to claim 1, **characterized in that** the rotor has a plurality of stellate plates (10) with impact tools (20) correspondingly arranged in a distributed manner on the circumference, wherein the stellate plates are arranged congruently above one another in projection, so that all impact tools lying above one another are aligned.

12. The rotor according to claim 1, **characterized in that** a plurality of adjacent mounting bolts (34) are secured by means of a safety slider (53), which has at least one slider slot, through which a securing screw engages, wherein the slider slot runs such that under the action of centrifugal force, the safety slider comes to lie above the mounting bolts (34).

## Revendications

1. Rotor pour un broyeur à percussion avec un arbre de rotor (2) passant verticalement et au moins un plateau en étoile (10) relié de façon fixe avec celui-ci (10) sur lequel sont maintenus en grand nombre d'outils de percussion (20) interchangeables, fixés à celui-ci, les outils de percussion (20) ayant la configuration de pales avec une entaille (23) centrale du côté fixation, un bloc de maintien (24) étant conformé à celle-ci des deux côtés, des étriers porte-outil (30) étant présents au-dessus et en-dessous du plateau en étoile (10), lesquels coopèrent par conformité de forme avec les blocs de maintien (24), **caractérisé en ce que** les outils de percussion (20) peuvent être montés à une distance relative par rapport au centre de l'arbre de rotor (2) au moyen de pièces configurées (40) différentes interchangeables, les étriers porte-outil (30) étant logés pouvant pivoter en commun à chaque fois au moyen d'un axe de support (34) solidement fixé sur la pièce configurée (40) adaptée de manière fixe dans le plateau en étoile (10) et l'axe de support (34) venant en prise à travers l'étrier porte-outil (30) supérieur, ensuite à travers la pièce configurée (40) et finalement à travers l'étrier porte-outil inférieur (30).

2. Rotor selon la revendication 1, **caractérisé en ce que** les étriers porte-outil (30) sont plus minces d'un jeu que la largeur de l'entaille (23) dans les outils de percussion (20).

3. Rotor selon la revendication 1, **caractérisé en ce que** les outils de percussion (20) peuvent pivoter avec les étriers porte-outil (30) autour de l'axe de support (34) solidement fixé.

4. Rotor selon la revendication 1, **caractérisé en ce que** les blocs de maintien (24) sur les outils de percussion (20) ressortent sur l'extrémité orientée à l'état monté vers le plateau en étoile (10) et **en ce que** les étriers porte-outil (30) comportent un évidement (38) en forme de crochet laquelle permet de saisir en enveloppant avec du jeu le bloc de maintien (24) respectif par conformité de forme.

5. Rotor selon la revendication 4, **caractérisé en ce que** les outils de percussion en forme de pale (20) comportent une rainure d'engrènement (25) passant transversalement à l'expansion longitudinale des blocs de maintien, dont la paroi de rainure éloignée des blocs de maintien (24) est surélevée par rapport à la surface de pale des outils de percussion (20) et forme une nervure de butée (26) pour les étriers porte-outil (30).

6. Rotor selon la revendication 5, **caractérisé en ce que** les outils de percussion (20) en forme de pale comportent sur la surface opposée à la nervure de butée (26) deux nervures de renfort (27) passant en direction de la découpe et à se terminant à peu près au centre sur les blocs de maintien (24), qui comportent respectivement une surface frontale (28), laquelle sert de surface de butée pour chaque étrier porte-outil (30).

7. Rotor selon la revendication 1, **caractérisé en ce que** des évidements sont formés dans le plateau en étoile (10) dans lesquels les pièces configurées (40) peuvent être insérées par conformité de forme, lesquelles comportent un alésage d'appui (42) qui est dimensionné de façon correspondante aux axes de support (34).

8. Rotor selon la revendication 7, **caractérisé en ce que** les pièces configurées (40) possèdent un contour extérieur à symétrie spéculaire et l'alésage d'appui (42) est disposé sur l'axe longitudinal (41) des pièces configurées (40).

9. Rotor selon la revendication 1, **caractérisé en ce que** les étriers porte-outil (30) comportent un alésage d'appui (32) devant être traversé par l'axe de support (34) et deux axes (51) qui sont disposés sur une droite traversant diamétralement l'alésage d'appui (32), une plaquette de sécurité (50) étant maintenue pouvant pivoter sur un des deux axes (51), laquelle comporte un évidement pour saisir le deuxième axe (51) par conformité de forme et/ou de force.

10. Rotor selon la revendication 1, **caractérisé en ce que** le rotor (1) comporte plusieurs plateaux en étoile (10) avec des outils de percussion (20) correspondants disposés répartis uniformément sur la périphérie, deux plateaux en étoile (10) adjacents étant respectivement disposés décalés d'un demi pas des outils de percussion (20).

11. Rotor selon la revendication 1, **caractérisé en ce que** le rotor comporte plusieurs plateaux en étoile (10) avec des outils de percussion (20) disposés répartis de façon correspondante sur la périphérie, les plateaux en étoile étant disposés l'un sur l'autre dans la projection de façon coïncidente de telle sorte que tous les outils de percussion superposés se trouvent en ligne.

12. Rotor selon la revendication 1, **caractérisé en ce que** plusieurs axes de support (34) adjacents sont fixés au moyen d'un verrou de sécurité (53), lequel comporte au moins une fente de verrou à travers laquelle vient en prise une vis de fixation, la fente de verrou passant de telle sorte que sous l'effet de la force centrifuge le verrou de sécurité vient se placer sur l'axe de support (34).
